(19) Europäisches Patentamt

European Patent Office

Office européen des brevets

(11) **EP 0 974 556 A1**

(12) **EUROPEAN PATENT APPLICATION**

(43) Date of publication:
26.01.2000 Bulletin 2000/04

(51) Int. Cl.⁷: **C02F 3/34**, C02F 3/10

(21) Application number: **99113607.8**

(22) Date of filing: **12.07.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **20.07.1998 IT MI981667**

(71) Applicant:
**Manitoba Italia S.p.A.**
**20124 Milano (IT)**

(72) Inventors:
• **Massarani, Giorgio**
  **20133 Milano (IT)**
• **Vallario, Michele Marcello**
  **28100 Novara (IT)**

(74) Representative:
**Modiano, Guido, Dr.-Ing. et al**
**Modiano & Associati SpA**
**Via Meravigli, 16**
**20123 Milano (IT)**

(54) **Composition for treating wastewater, particularly for treating wastewater of septic tanks**

(57)  A composition for treating wastewater, particularly for treating wastewater of septic tanks, comprising an inoculum with a bacterium which belongs to a non-pathogenic sporogenous strain, a solid substrate which is suitable for the bacterial inoculum, and a salt of the $Mn^{++}$ ion. The composition according to the invention produces an effective activation of the process for the aerobic and anaerobic digestion of the organic material contained in the wastewater of septic tanks which is responsible for the production of malodorous gas emissions.

## Description

The present invention relates to a composition for treating wastewater, particularly for treating wastewater of septic tanks.

Specifically, the present invention relates to a composition for activating the aerobic and anaerobic digestion of the organic material contained in civil drainage water collected in septic tanks.

Drainage water is notoriously divided into rainwater and wastewater.

The present invention is applied in the treatment of wastewater, particularly civil drainage water which, before being sent to the sewer system, is conveyed into suitable tanks known as septic tanks, where the organic material contained in said water undergoes enzymatic degradation.

The system of septic tanks is part of the disposal system of small rural settlements and of single- or multiple-family housing units.

Sedimentation occurs inside these tanks, causing the separation of a surface liquid phase from two solid phases (one floating on the liquid phase, the scum, and one on the bottom) associated with fermentation. This aerobic and anaerobic fermentation is caused by the endogenous microbiological flora, which digests the organic materials, causing their partial degradation and liquefaction.

Effective digestion of the bacteria, however, is often compromised by the presence, in the wastewater, of disinfectant or antibacterial products, such as those contained in the formulation of many products for household use. Furthermore, the digestive process is often reduced in periods in which the tank is overcounted because of an exceptional water flow, and the process can often be interrupted during periods of long inactivity, such as summer periods.

Solid materials can accumulate in such conditions, with the risk of blocking the outflow and of accordingly producing bad odors.

Preparations meant to limit the occurrence of the main drawbacks related to the use of septic tanks are currently known.

For example, patent EP 0 248 709 discloses the use of kaolinite and patent EP 0 446 542 discloses the use of a mixture of kaolinite and zeolite to accelerate the degradation reactions on the organic material of the waste water produced by the endogenous microbiological flora. In particular, the introduction of these substances in the wastewater in powder form with selected particle sizes and with a specific cationic exchange capacity increases the reduction of the COD (Chemical Oxygen Demand) and of the volume of cellulose fiber that is present in the drainage water. The addition of exogenous populations of microflora in the wastewater is explicitly discouraged.

Currently it is also known to use products for the treatment of the waste water of septic tanks which are constituted by a solid substrate material which contains a population of selected microorganisms.

The microorganisms deemed suitable for this use are constituted by bacterial strains having a sufficiently long life and resistance to unfavorable environmental conditions which allow to package them without compromising their vital characteristics and their ability to reproduce for a sufficiently long time.

These microbiological products, however, are not free from drawbacks in use, mainly related to their limited ability to digest the organic material.

Due to their slow degradation of some organic substances which can be attacked by enzymes with greater difficulty, said substances tend to accumulate inside the tank, modifying the equilibrium of the endogenous microflora and causing abnormal fermentation and production of malodorous substances.

The aim of the present invention is to eliminate or significantly reduce the drawbacks noted in the known art.

An object of the present invention is to provide a composition suitable for treating wastewater which allows effective degradation of the organic material contained therein, considerably limiting the development of malodorous emissions.

Another object of the present invention is to provide a composition for treating wastewater of septic tanks which is capable of activating the aerobic and anaerobic digestion of the organic substances that are present without entailing epidemiological or toxicological risks in use.

Another object of the invention is to provide a composition for treating wastewater, particularly for treating wastewater of septic tanks, which is simple to use for the ordinary household user and does not entail high production costs.

In view of this aim, these objects and others which will become apparent hereinafter and according to the present invention, a composition for treating wastewater, particularly for treating wastewater of septic tanks, is provided which comprises an inoculum of a bacterium which belongs to a nonpathogenic sporogenous strain on a solid substrate which is suitable for the bacterial inoculum, characterized in that it includes a salt of the $Mn^{++}$ ion.

The present invention uses strains of sporogenous bacteria which are conveniently capable of surviving ordinary packaging conditions and produce, in their vegetative form, metabolites which have a hydrolytic enzymatic activity.

In particular it is possible to use bacteria which produce metabolites which have a specific enzymatic activity in the hydrolysis of fats (lipolytic activity), proteins (proteolytic activity), starches (amylolytic activity) and cellulose (cellulosolytic activity).

An essential requirement of the bacteria that can be used in the present invention is that they belong to nonpathogenic species.

The scope of the protection of the invention therefore does not include bacterial species belonging to classes 2, 3 and 4 of annex IX of Legislative Decree 626/94 and of EEC Directive 90/679 related to the protection of workers from biological risks, of which said law is the transposition in the Italian juridical system. The bacterial species listed in the Italian Ministerial Decree of 31 January 1996, which is the basic law for the protection of plant species, are likewise excluded.

It has been found that these characteristics and requirements are met by nonpathogenic microorganisms of the genus Bacillus. Advantageously, these bacteria are sporogenous, have an aerobic and anaerobic metabolism and have a vegetative form which is capable of producing metabolites which have an enzymatic activity.

According to a preferred embodiment of the composition according to the invention, the bacterial strain of the genus Bacillus that is used is chosen from the group that comprises Bacillus thuringiensis, Bacillus sphaericus, Bacillus subtilis, Bacillus lentus, Bacillus megaterium, Bacillus amyloliquefaciens and mixtures thereof

It has been found that the composition according to the invention performs a particularly effective anaerobic and aerobic digestive activity on organic substances contained in wastewater when the bacterial count is not lower than $10^5$ CFU/g and preferably not lower than $10^6$ CFU/g.

The above described bacterial strains are inoculated on a solid substrate, advantageously in powder form, particularly of the type suitable for the growth of Bacilli. Suitable solid substrates are advantageously chosen from the group that comprises natural aluminosilicates, carbonates of alkaline-earth metals, minerals from calcareous rocks, and substances of vegetable origin.

Suitable solid substrates are constituted, for example, by by-products of the processing of cereals such as bran or corn-cob powder, or mineral bases from calcareous rocks such as dolomite, calcite and corals, or from silicates such as clays and bentonites.

It has now been found that by inoculating a solid substrate with a microorganism as described above and by adding a salt of the $Mn^{++}$ ion a composition is obtained which is particularly suitable and surprisingly effective in activating the process for the aerobic and anaerobic digestion of the organic material contained in the wastewater of septic tanks.

In general it is possible to use any salt of the manganese II ion, although use of manganese sulfate is preferred.

In particular, it has been found that the presence of a salt of the manganese II ion in the composition according to the invention, in an amount between 0.1 and 3% by weight, more preferably between 0.3 and 2% by weight, expressed as Mn, is suitable to provide an increase in the total bacterial count when the composition is added to the sewage water of septic tanks.

The increase in the total bacterial count determined by the presence of an effective quantity of the composition according to the invention in the septic tank leads to a considerable increase in the aerobic and anaerobic activity for digestion of the organic material.

An appropriate use of the composition according to the invention entails dissolving an effective quantity in the household waste pipes so as to reach the septic tank by following the flow of the water.

The expression "effective quantity" relates to an amount of composition which is capable of activating the process for aerobic and anaerobic digestion of the organic material contained in the wastewater of the septic tank. A substantially immediate confirmation of the activation of digestion by the bacterial flora is achieved by monitoring the amount of organic material. The decrease in the amount of organic material that is present indicates an adequate level of activation of the digestion by metabolites of the bacteria.

The use of the composition according to the invention in waste collection tanks is particularly advantageous in that it allows to considerably limit the risk of blockage of the discharge of the wastewater toward the sewer system.

According to a preferred embodiment, the composition according to the invention furthermore comprises an acid, preferably of the weak type, more preferably of the organic type.

Advantageously, the acid is present in a concentration which brings the pH to a value between 5 and 6, in a 10% suspension in water by weight.

Suitable weak organic acids are preferably chosen among citric, tartaric and lactic acid; citric acid is preferred.

The following examples are provided merely as illustrations of the present invention and must not be understood to limit the scope of said invention as defined by the appended claims.

EXAMPLE 1

The effect of the presence of the manganese II ion in the composition according to the invention was verified by testing the variation in sporulation in bacterial populations cultivated in the presence of a $Mn^{++}$ salt with respect to those grown without the salt.

Testing used a mixture of three strains of bacilli from the genera Bacillus thuringiensis, Bacillus lentus and Bacillus sphaericus. Manganese sulfate was used as the manganese salt. No appreciable variations of the test were observed when replacing $MnSO_4$ with another $Mn^{++}$ salt.

A change in the environmental conditions was achieved by thermal variation, inducing an increase in spontaneous sporulation.

With this method it was possible to provide conditions unfavorable for the survival of vegetative forms without altering the formulation.

The incubation temperature was varied from 20°C up to 80°C with a thermal step of 10° C at regular intervals, in order to distress the vegetative forms and accordingly stimulate sporulation.

At time zero and at each thermal step, the total bacterial counts was determined on all samples after pasteurizing them in order to count only the spores.

The results are listed in the following Table 1, which shows that the highest values of bacterial count are obtained at $Mn^{++}$ concentrations of 10 mg/l, whereas for higher concentrations of $Mn^{++}$ a bacterial count inhibitory effect occurs.

In particular, the controlled test conducted on the three test strains shows that at concentrations between 10 and 100 mg/l the salt of the manganese II ion does not induce sporulation stimulation effects.

No systematic increase in the total bacterial count after pasteurization with respect to a reference blank free from manganese II ion was detected at any of the tested concentrations.

TABLE 1

| Values of total bacterial count (cfu/ml) at the various temperatures and at the various concentrations of $MnSO_4$ | | | | | | | | |
|---|---|---|---|---|---|---|---|---|
|  | -- | 20°C | 30°C | 40°C | 50°C | 60°C | 70°C | 80°C |
|  | cfu/ml | cfu/ml | cfu/ml | cfu/ml | cfu/ml | cfu/ml | cfu/ml | cfu/ml |
| blank | 390,000 | 570,000 | 870,000 | 328,000 | 250,000 | 306,000 | 328,000 | 525,000 |
| 100 mg/l | 390,000 | 450,000 | 410,000 | 300,000 | 300,000 | 240,000 | 77,000 | 200,000 |
| 50 mg/l | 390,000 | 270,000 | 268,000 | 216,000 | 174,000 | 184,000 | 290,000 | 345,000 |
| 25 mg/l | 390,000 | 201,000 | 190,000 | 190,000 | 315,000 | 280,000 | 220,000 | 200,000 |
| 10 mg/l | 390,000 | 485,000 | 620,000 | 350,000 | 248,000 | 340,000 | 220,000 | 310,000 |

Following the same method and using manganese sulfate concentrations between 2.5 and 7.5 mg/l, an increase in the total bacterial count is observed which is due to the growth of the vegetative forms and of the spores, as shown in the following Table 2, which lists the higher temperatures because they cause the greatest change in the system.

TABLE 2

| Values of total bacterial count (cfu/ml) at the various temperatures and at the various concentrations of $MnSO_4$ | | | | | |
|---|---|---|---|---|---|
| | 20°C | 50°C | 60°C | 70°C | 80°C |
| | cfu/ml | cfu/ml | cfu/ml | cfu/ml | cfu/ml |
| blank P* | 20,000 | 17,700 | 13,000 | 8,800 | 22,000 |
| blank NP* | 50,000 | 27,500 | 30,000 | 18,000 | - |
| 7.5 mg/l P* | 20,000 | 25,400 | 21,900 | 22,500 | 24,000 |
| 7.5 mg/l NP** | 50,000 | 42,000 | 32,000 | 32,000 | - |
| 5.0 mg/l P* | 20,000 | 21,000 | 22,100 | 12,600 | 63,200 |
| 5.0 mg/l NP** | 50,000 | 50,000 | 50,000 | 33,400 | - |
| 2.5 mg/l P* | 20,000 | 13,000 | 31,000 | 36,000 | 25,000 |
| 2.5 mg/l NP** | 50,000 | 24,000 | 38,000 | 56,000 | - |

*P=pasteurized
**NP=not pasteurized

The results show that the presence of a $Mn^{++}$ salt in the composition according to the invention in an amount between 2.5 and 10 mg/l effectively stimulates sporulation, allowing the bacterial inoculum to remain in a silent form which is capable, however, of converting to an active vegetative form as soon as the appropriate environmental conditions are reestablished (as demonstrated by dissolving the mixture in the water of the lavatory).

EXAMPLE 2

A composition (A) for treating wastewater, constituted by a mixture of aluminosilicates (bentonites and clinoptilotite) and minerals in powder form (dolomite, ferrous sulfate) with citric acid, inoculated with a bacterial culture of Bacillus thuringiensis and Bacillus sphaericus in the form of spores and having a percentage distribution of the component as listed in the accompanying Table 3, received the addition of manganese sulfate (B - composition according to the invention) and was subjected to tests similar to those listed in Example 1.

TABLE 3

| Compositions | | |
|---|---|---|
| Component | A | B |
| | % | % |
| Sporogenous bacterial culture | 5.00 | 5.00 |
| Bentonite | 51.55 | 51.05 |
| Clinoptilotite | 32.00 | 32.00 |
| Dolomite | 7.00 | 7.00 |
| Ferrous sulfate heptahydrate | 3.00 | 3.00 |
| Randalite | 1.00 | 1.00 |
| Citric acid | 0.45 | 0.45 |
| Manganese sulfate monohydrate | - | 0.50 |
| Characteristics | | |
| pH 10% sol. | 5.5 | 5.8 |
| Total bacterial count | $2.5 \times 10^5$ cfu/g | $2.5 \times 10^5$ cfu/g |

The results are listed in the following Table 4, which shows that the presence of the count ion substantially increases the total bacterial count in the aqueous suspensions of the mixture according to the invention, for both vegetative forms and spores, with respect to a reference blank free from said salt.

TABLE 4

| Values of total bacterial count (cfu/ml) at the various temperatures of formulations A and B of Table 3 | | | | |
|---|---|---|---|---|
| | 20°C | 60°C | 70°C | 80°C |
| | cfu/l | cfu/l | cfu/l | cfu/l |
| A - P* | 10,000 | 290,000 | 135,000 | 236,000 |
| A - NP** | 15,000 | 390,000 | 248,000 | - |
| B - P* | 10,000 | 364,000 | 193,500 | 400,000 |
| B - NP** | 15,000 | 459,000 | 233,000 | - |

*P = pasteurized
**NP = not pasteurized

EXAMPLE 3

Approximately 25 grams per week of a composition of the type described in example 2 were added in a septic tank measuring approximately 1 m$^3$, suitable for collecting wastewater of a single-family house.

The septic tank used was in normal working conditions and had bottom sludge, a wide region of partially cleared flowing water and a surface scum whose thickness varied over time.

The wastewater treatment composition was distributed evenly between the bottom of the tank and the surface scum.

The organic materials present at the bottom of the tank and at the surface are the nutrient for the bacteria inoculated in the composition. The process for digesting the organic materials leads to their solubilization, allowing them to flow out with the discharge water stream.

In order to determine a concentration of count ions in the sludge of the septic tanks which could be likened to the one that proved itself effective in example 2, measurements were conducted on standard tanks used in single-family housing units.

These measurements showed that the total volumes of bottom sludge and scum are generally on the order of 10-20% of the total volume of the tank and therefore they amount to 100-200 l for a 1 $m^3$ tank.

It has thus been determined that in order to obtain a $Mn^{++}$ ion concentration in the sludge which can be likened to the one found effective in the tests of example 2 it is necessary to introduce approximately 0.16-0.32 g/week in the tank, which is equivalent to $Mn^{++}$ concentrations in the composition in powder form of approximately 0.6-1.3% by weight.

EXAMPLE 4

Two compositions for treating waste water, hereinbelow referred to as activators for septic tanks, were used to run an effectiveness test on real sludge obtained from septic tanks under use. The first activator (X) is formulated in accordance with the prior art, whereas the second (Y) is in accordance with the present invention.

| COMPOSITIONS | | |
|---|---|---|
| Component | Known Composition (Activator X) | Composition of the invention (Activator Y) |
| | % | % |
| Sporogenic bacterial culture | 5.00 | 5.00 |
| Mineral base | 91.55 | 90.90 |
| Additives | 3.45 | 3.45 |
| Monohydrated manganese sulfate | - | 0.65 |

The obtained sludge was divided into 9 containers grouped in three series of three containers each. The first series of containers was added with Activator X, the second with Activator Y, while the third was used as such.

The two activators were added in a quantity of 1 gr of activator per litre of sludge. This amount has been determined based on the instructions of use of the product, which provide for the introduction of 25 grams/week of product in a septic tank with a volume of 1 $m^3$ having an average content of 200 litres of bottom sludge, and the duration of the test, that is 8 weeks. Thus:

$$\text{Amount of activator} = 25 \text{ (gr/week)} \times 8 \text{ (weeks)}/200 \text{ (litres)} = 1 \text{ gr/l}$$

The containers with the sludge were thus stored in a dark place at constant temperature to simulate the environment of the septic tanks.

The measurements of total COD, soluble COD, Fat & Oils, Total Suspended Solids, and Volatile Suspended Solids were taken every 14 days. The duration of the test was 56 days.

All the measurements were taken twice, and for each parameter the average value was then calculated based on the results obtained for the three containers of the series.

The thus obtained data relevant to each parameter were processed according to the following formula:

$$[1-(\text{Value at time } t/\text{Initial Value})] \times 100$$

giving the percentage decrease.

Finally, the data relevant to the five parameters were averaged in order to obtain one parameter (hereinbelow referred to as "index of percentage effectiveness") every fourteen days for each series of containers; this allows a direct comparison of the three series of containers.

In order to prove that 56 days (8 weeks) are sufficient to conclude the test, another determination of the parameters was carried out 105 days after the start of the test and the results obtained were found consistent with those determined on the 56th day.

The indexes of percentage effectiveness calculated twice a week per series of containers are listed in the following Table 5.

Table 5

| DAYS | 0 | 14 | 28 | 42 | 56 | 105 |
|---|---|---|---|---|---|---|
| Non-treated series | 0 | 6.50 | 10.48 | 20.70 | 23.09 | 24.95 |
| Series treated with X | 0 | 8.37 | 14.61 | 26.12 | 31.48 | 33.48 |
| Series treated with Y | 0 | 7.75 | 12.68 | 26.75 | 38.28 | 40.46 |

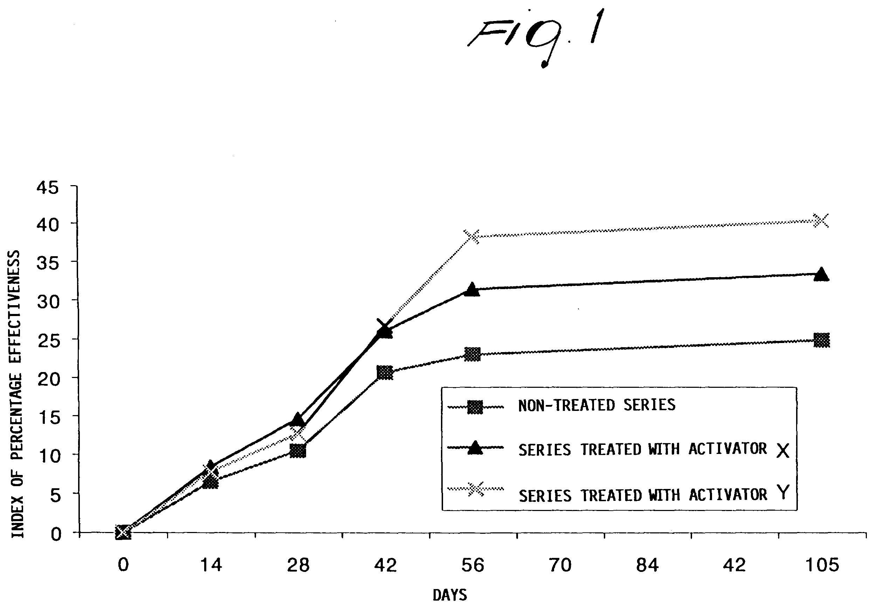

The obtained results are plotted in Figure 1 wherein the effectiveness index is on the vertical axis and in the horizontal the duration of the treatment.

By setting to 1 the increase of the index of percentage effectiveness of the Activator X with respect to the non-treated sludge, after 56 days the Activator Y is 80% more efficient than Activator X.

EXAMPLE 5

The effectiveness of two activators for septic tanks having different formulations but containing the same bacterial strains in equal quantities has been tested. One of the activators was added with a salt of Mn++.

The formulations of the two activators are as follows:

| Activator S | % |
|---|---|
| Sporogenic bacterial culture | 5.00 |
| Mineral base | 91.55 |
| Additives | 3.45 |
| Activator T | % |
| Sporogenic bacterial culture | 5.00 |
| Mineral base | 52 |
| Vegetal base | 28 |
| Additives | 12 |
| Monohydrated manganese sulfate | 3 |

The sludge were obtained from septic tanks under use. Said sludge were divided into 15 containers grouped in three series of five containers each. The first series of containers was added with Activator S, the second with Activator T, while the third was used as such.

The two activators were added in a quantity of 1 gr of activator per sludge litre. This amount has been determined based on the instructions of use of the product, which provide for the introduction of 25 grams/week of product in a septic tank with a volume of 1 m3 having an average content of 200 litres of bottom sludge, and the duration of the test, that is 8 weeks. Thus:

Amount of activator = 25 (gr/week)x8 (weeks)/200 (litres) = 1 gr/l

The containers with the sludge were thus stored in a dark place at a constant temperature to simulate the environment of the septic tank.

The measurements of total COD and Total Suspended Solids were taken every 14 days. The duration of the test was 56 days.

All the measurements were taken twice, and for each parameter the average value was then calculated based on the results obtained for the three containers of the series.

The thus obtained data relevant to each parameter were processed according to the following formula:

[1-(Value at time t/Initial Value)]x100

giving the percentage decrease.

Finally, the data relevant to the two parameters were averaged in order to obtain one parameter (hereinbelow referred to as "index of percentage effectiveness") every fourteen days for each series of containers; this allows a direct comparison of the three series of containers.

In order to prove that 56 days (8 weeks) are sufficient to conclude the test, another determination of the parameters was carried out 70 days after the start of the test and the results obtained were found consistent with those determined on the 56$^{th}$ day.

The indexes of percentage effectiveness calculated every two weeks per series of containers are listed in the following Table 6.

Table 6

| DAYS | 0 | 14 | 28 | 42 | 56 | 70 |
|---|---|---|---|---|---|---|
| Non-treated series | 0 | 10.19 | 17.93 | 23.61 | 25.10 | 23.20 |
| Series treated with S | 0 | 15.03 | 21.64 | 30.33 | 30.68 | 30.32 |
| Series treated with T | 0 | 17.88 | 26.06 | 35.31 | 36.08 | 36.66 |

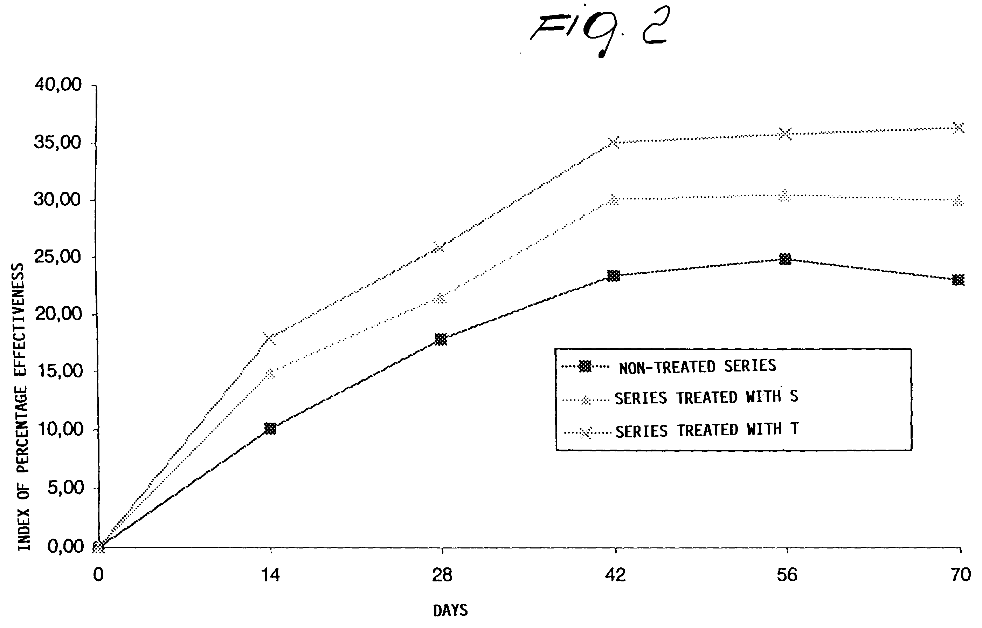

The above data are plotted in Figure 2 in which, by setting to 1 the increase of the index of percentage effectiveness of the Activator S with respect to the non treated sludge, after 56 days the Activator T is 97% more efficient than Activator S.

The disclosures in Italian Patent Application No. MI98A001667 from which this application claims priority are incorporated herein by reference.

**Claims**

1. A composition for treating wastewater, particularly for treating wastewater of septic tanks, comprising an inoculum of a bacterium which belongs to a nonpathogenic sporogenous strain on a solid substrate which is suitable for the bacterial inoculum, characterized in that it includes a salt of the Mn$^{++}$ ion.

2. A composition according to claim 1, characterized in that said sporogenous strain belongs to the genus Bacillus.

3. A composition according to claim 2, characterized in that the bacterial strain of the genus Bacillus is chosen from the group that comprises Bacillus thuringiensis, Bacillus sphaericus, Bacillus subtilis, Bacillus lentus, Bacillus megaterium, Bacillus amyloliquefaciens and mixtures thereof.

4. A composition according to any one of the preceding claims 1-3, characterized in that it has a bacterial count of no less than 10$^5$ cfu/g.

5. A composition according to any one of claims 1-4, characterized in that said solid substrate is in powder form.

6. A composition according to any one of claims 1-5, characterized in that said solid support is chosen from the group that comprises natural aluminosilicates, carbonates of alkaline-earth metals, minerals from calcareous rocks, substances of vegetable origin.

7. A composition according to any one of claims 1-6, characterized in that said salt of the Mn$^{++}$ ion is present in an amount between 0.1 and 3% by weight, expressed as Mn.

8. A composition according to claim 7, characterized in that said Mn$^{++}$ ion is present in an amount between 0.3 and 2% by weight.

9. A composition according to any one of claims 1-8, characterized in that it further comprises a weak acid.

10. A composition according to any one of claims 1-9, characterized in that it generates a pH value between 5 and 6 in a 10% water suspension by weight.

11. A composition according to any one of claims 1-10, characterized in that said sporogenous strain produces metabolites with specific enzymatic activity in the hydrolysis of fats, proteins, starches and cellulose.

FIG. 1

Fig. 2

EP 0 974 556 A1

**European Patent Office**

## EUROPEAN SEARCH REPORT

Application Number

EP 99 11 3607

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 342 525 A (ROWSELL FARRELL D) 30 August 1994 (1994-08-30) | 1-3,5,6, 11 | C02F3/34 C02F3/10 |
| Y | * column 21, line 8 - column 23, line 5 * | 9 | |
| X | GB 2 274 465 A (BIOTECHNA LTD) 27 July 1994 (1994-07-27) * claims 1,5,6,17; example 5 * | 1-3,11 | |
| Y | FR 2 338 227 A (SETRIC) 12 August 1977 (1977-08-12) * claim 1 * | 9 | |
| A | US 5 019 265 A (HERVE PHILIP) 28 May 1991 (1991-05-28) | 1-11 | |
| A | US 4 824 671 A (ELLIS BETH-JAYNE ET AL) 25 April 1989 (1989-04-25) | 1-11 | |

TECHNICAL FIELDS SEARCHED (Int.Cl.7)

C02F

The present search report has been drawn up for all claims

| Place of search | Date of completion of the search | Examiner |
|---|---|---|
| THE HAGUE | 29 November 1999 | Gonzalez Arias, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 0 974 556 A1

## ANNEX TO THE EUROPEAN SEARCH REPORT
## ON EUROPEAN PATENT APPLICATION NO.

EP 99 11 3607

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-1999

| Patent document cited in search report | | Publication date | Patent family member(s) | | Publication date |
|---|---|---|---|---|---|
| US 5342525 | A | 30-08-1994 | US | 5176831 A | 05-01-1993 |
| | | | AU | 669547 B | 13-06-1996 |
| | | | AU | 4528193 A | 04-01-1994 |
| | | | CA | 2136628 A,C | 23-12-1993 |
| | | | EP | 0644856 A | 29-03-1995 |
| | | | WO | 9325480 A | 23-12-1993 |
| GB 2274465 | A | 27-07-1994 | AU | 687769 B | 05-03-1998 |
| | | | AU | 5705494 A | 04-07-1994 |
| | | | CA | 2129996 A | 23-06-1994 |
| | | | DE | 628073 T | 06-07-1995 |
| | | | EP | 0628073 A | 14-12-1994 |
| | | | ES | 2064304 T | 01-02-1995 |
| | | | WO | 9413782 A | 23-06-1994 |
| | | | JP | 7506006 T | 06-07-1995 |
| FR 2338227 | A | 12-08-1977 | NONE | | |
| US 5019265 | A | 28-05-1991 | FR | 2633607 A | 05-01-1990 |
| | | | AT | 95146 T | 15-10-1993 |
| | | | DE | 68909517 D | 04-11-1993 |
| | | | DE | 68909517 T | 17-02-1994 |
| | | | EP | 0349441 A | 03-01-1990 |
| | | | ES | 2059799 T | 16-11-1994 |
| | | | JP | 2078494 A | 19-03-1990 |
| US 4824671 | A | 25-04-1989 | AU | 599374 B | 19-07-1990 |
| | | | AU | 7206787 A | 20-10-1987 |
| | | | CA | 1283074 A | 16-04-1991 |
| | | | EP | 0262195 A | 06-04-1988 |
| | | | IL | 81857 A | 10-06-1991 |
| | | | IN | 168666 A | 18-05-1991 |
| | | | JP | 63502961 T | 02-11-1988 |
| | | | NZ | 219733 A | 21-12-1990 |
| | | | PH | 24691 A | 07-09-1990 |
| | | | PT | 84552 A,B | 01-04-1987 |
| | | | WO | 8705928 A | 08-10-1987 |

EPO FORM P0459

For more details about this annex : see Official Journal of the European Patent Office, No. 12/82